# EUROPEAN PATENT APPLICATION

(11) **EP 4 541 576 A1**
(43) Date of publication of application: **23.04.2025**
(21) Application number: 24207494.6
(22) Date of filing: 18.10.2024
(51) Int. Cl.: B32B 5/02, B32B 5/08, B32B 5/24, B32B 5/26, B32B 27/30

(54) **FACER MATERIAL FOR INSULATION**

(30) Priority: 20.10.2023 US 202318382383
(71) Applicant: Johns Manville, Denver, CO 80202 (US)
(72) Inventor: Zhihua, Guo, Ottawa Hills, 43615 (US); Rui, Ferreira, Boulder, 80301 (US)
(74) Representative: Dörr, Klaus

(57) **Abstract**

An insulation component comprising a glassless wet-laid nonwoven polymeric layer comprising a plurality of polymeric fibers, a binder, and a core layer coupled to the polymeric layer. The plurality of polymeric fibers have a linear mass density of between about 0.5 denier and 13.0 denier, and a length of between about 5 mm and 50 mm. The binder has a binder add-on percentage of between about 5% and 30%. The glassless wet-laid nonwoven polymeric layer has a basis weight with a coefficient of variation between about 1% and 5%.

## Description

### BACKGROUND

Insulation may be used in buildings or vehicles to provide thermal and acoustic insulation. Facers may be positioned on an outer face of the insulation to provide a number of benefits to that insulation. For example, the facer may protect the internal material of the insulation, provide an aesthetic appearance to the insulation, and provide greater ease of handling for the insulation. Facers may further provide insulative properties, such as further thermal and acoustic insulative qualities. Accordingly, it would be beneficial for improved facer designs, and methods of manufacturing thereof, to improve, at least, the insulative qualities and ease of handling of the insulation component.

### SUMMARY

One aspect of the disclosure provides for an insulation component. The insulation component comprises a glassless wet-laid nonwoven polymeric layer comprising a plurality of polymeric fibers, a binder, and a core layer coupled to the polymeric layer. The plurality of polymeric fibers have a linear mass density of between about 0.5 denier and 13.0 denier, and have a length of between about 5 mm and 50 mm. The binder has a binder add-on percentage of between about 5% and 30%. The glassless wet-laid nonwoven polymeric layer has a basis weight with a coefficient of variation between about 1% and 5%. The binder may comprise one or both of an acrylic-based binder and a styrene butadiene-based binder. The plurality of polymeric fibers may comprise one or more of PET fibers, acrylic fibers, polyester fibers, and polypropylene fibers. The core layer may be a glassless polymeric material. The plurality of polymeric fibers may have a diameter of between about 5 µm and 50 µm. The polymeric layer and the core layer may be coupled together with an adhesive layer. The core layer may be a first core layer of a plurality of core layers. The core layer may be coupled to the polymeric layer through a binding element. The core layer may be one of a wet-laid, spunbond, or meltblown mat. The glassless wet-laid nonwoven polymeric layer may include a first face and a second face, and the first face may be coupled to the core layer and the second face may include a design.

Within the meaning of the instant invention, the term glassless means substantially or fully free of glass material and substantially means less than 10 wt.-% of glass fibers, preferably less than 8% glass fibers, more preferred less than 6% glass fibers, in particular less than 4% glass fibers, or in particular preferred less than 2% glass fibers.

Thus, the glassless wet-laid nonwoven polymeric layer according to the instant invention, after curing, may include between at least 60 wt.-% polymeric fibers and up to 100 wt.-% polymeric fibers, preferably between at least 70 wt.-% polymeric fibers and up to 100 wt.-% polymeric fibers. The glassless wet-laid nonwoven polymeric layer according to the instant invention, after curing, may include between at least 5 wt.-% binder and up to 30 wt.-% binder. The binder is in the cured state and means solid binder.

Another aspect of the disclosure provides for a method of manufacturing an insulation component, comprising forming a glassless wet-laid nonwoven polymeric layer. Forming the glassless wet-laid nonwoven polymeric layer comprising a plurality of polymeric fibers and a binder. The plurality of polymeric fibers have a linear mass density of between about 0.5 denier and 13.0 denier and a length between about 5 mm and 50 mm. The binder has a binder add-on percentage of between about 5% and 30%. The glassless wet-laid nonwoven polymeric layer has a basis weight with a coefficient of variation between about 1% and 5%. The method further comprises coupling a core layer to the polymeric layer. The binder may comprise one or both of an acrylic-based binder and a styrene butadiene-based binder. The plurality of polymeric fibers may comprise one or more of PET fibers, acrylic fibers, polyester fibers, and polypropylene fibers. The core layer may be a glassless polymeric material or fiberglass material. The plurality of polymeric fibers may have a diameter of between about 5 µm and 50 µm. Coupling the core layer to the polymeric layer may include coupling the core layer to the polymeric layer through a binding element. The method may further comprise forming the core layer through a wet-laid process, spunbond process, or meltblown process. The method may further comprise embossing a design on the polymeric layer. The method may further comprise dying a color on the polymeric layer.

Another aspect of the disclosure provides for a mat, comprising a plurality of polymeric fibers and a binder. The plurality of polymeric fibers have a linear mass density of between about 0.5 denier and 13.0 denier and a length of between about 5 mm and 50 mm. The has a binder add-on percentage of between about 5% and 30%. The mat has a basis weight with a coefficient of variation between about 1% and 5%.

### BRIEF DESCRIPTION OF THE DRAWINGS

A further understanding of the nature and advantages of various embodiments may be realized by reference to the following figures. In the appended figures, similar components or features may have the same reference label. Further, various components of the same type may be distinguished by following the reference label by a dash and a second label that distinguishes among the similar components. If only the first reference label is used in the specification, the description is applicable to any one of the similar components having the same first reference label irrespective of the second reference label.
FIG. 1 illustrates an example cured mat according to one aspect of the disclosure.
FIG. 2 illustrates a simplified, cross-sectional view of an example insulation component according to one aspect of the disclosure.
FIG. 3 illustrates a simplified, cross-sectional view of an example insulation component according to one aspect of the disclosure.
FIG. 4A illustrates a schematic view of a method of manufacturing the cured mat of FIG. 1 according to one aspect of the disclosure.
FIG. 4B illustrates a schematic view of post-processing the mat manufactured by the method of FIG. 4A.

### DETAILED DESCRIPTION

The subject matter of embodiments of the present invention is described here with specificity to meet statutory requirements, but this description is not necessarily intended to limit the scope of the claims. The claimed subject matter may be embodied in other ways, may include different elements or steps, and may be used in conjunction with other existing or future technologies. This description should not be interpreted as implying any particular order or arrangement among or between various steps or elements except when the order of individual steps or arrangement of elements is explicitly described.

Acoustic panels may be insulation that provide acoustic absorption. In some examples, the acoustic panels may be made of fiberglass or foam. Facers for such insulation may be the outer-most layer of the insulation (e.g., acoustic panels that provide acoustic insulation). As such, any imperfections along the facer may be particularly visible to anyone viewing the insulation. For example, where the facer is made of a non-uniform mat (e.g., a mat with a less uniform basis weight and thickness), the non-uniformity may be visible as a defect to a user viewing the insulation. Further, this non-uniformity may impart such defects on outer layers, such as fabric layers, which may diminish the appearance of those outer layers as well. Such a defect may be particularly noticeable where the facer is made of multiple non-uniform mats as stacking multiple non-uniform mats layered together may, in aggregate, enhance the visual effects of such non-uniformity (e.g., by 15 mm or more). This non-uniformity may occur from forming the mat using a spunbond process. Accordingly, it is desirable to manufacture mats of the facer to be more uniform.

Further, where the facer is produced using mats made of a glass material, such as fiberglass, the facer may be itchy when handled by a user. It may also be difficult to apply further designs along a glass facer (e.g., via embossing) due to the more brittle nature of glass. Glass generally melts around 1400 °F while embossing generally heats up the material to around 300-400 °F. An example of such a facer may be described in U.S. Patent Application No. 63/408,660 entitled "Improved Nonwoven Facer," which is incorporated by reference herein in their entirety. Accordingly, it is desirable to manufacture mats of the facer with a material that is less itchy and more amenable to further post processing.

The present disclosure is directed to producing a wet-laid, nonwoven mat. Such a mat may be more uniform than other mats. Further, the mat may be glassless (e.g., substantially or fully free of glass material, as described further below), such as being substantially polymeric. This greater uniformity and material composition may address the concerns noted above.

### 1. EXAMPLE MAT

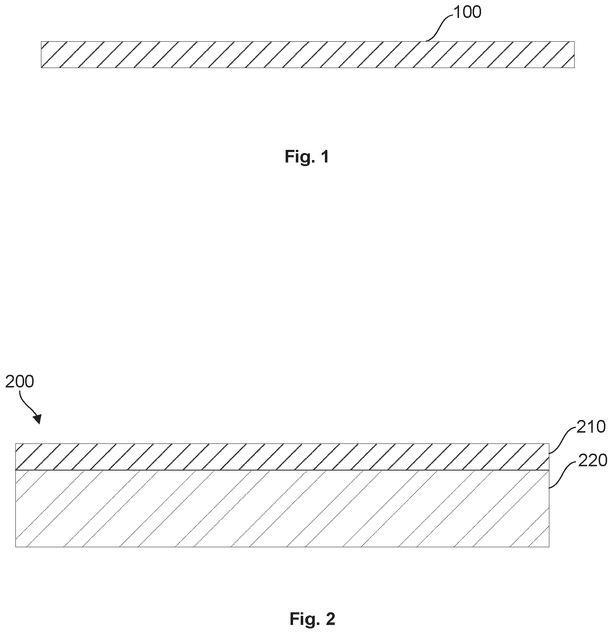

FIG. 1 depicts a simplified cross-sectional view of an example cured mat 100. As will be discussed in greater detail below, the mat 100 may be formed from a wet-laid process such that the mat 100 is a nonwoven, wet-laid mat. The mat 100 may be made of a material including fibers adhered together with a binder. The fibers of the mat 100 may be 100% polymer fibers, without any glass fibers. However, in other embodiments, the fibers of the mat 100 may be substantially glassless. For example, the mat 100 may be substantially glassless when the mat 100 includes less than about 10% glass fibers, less than about 8% glass fibers, less than about 6% glass fibers, less than about 4% glass fibers, or less than about 2% glass fibers. The mat 100 may be fully glassless when the mat 100 includes no glass fibers. The mat 100 formed of synthetic polymeric fibers provides a soft surface that may be grasped by an end user without the end user dealing with any itchiness as may occur when using glass fibers. Additionally, by making mat 100 with polymeric fibers, rather than glass fibers, the mat 100 may be more easily recycled than similar glass mats, making the mat 100 more environmentally friendly than traditional glass mats. In some embodiments, the mat 100 may be a single layer, while in other embodiments the mat 100 may be formed of two or more layers.

The polymeric fibers of the glassless wet-laid nonwoven polymeric layer, in particular mat 100, may be formed from any polymeric material. For example, the polymeric fibers may be acrylic fibers, polyester fibers, polypropylene fibers, aramid fibers, nylon fibers, polyethylene fibers, rayon fibers, polyvinylidene fluoride (PVDF) fibers, polyethylene terephthalate (PET) fibers, and/or other polymeric fibers. In one particular embodiment, the polymeric fibers may be low shrink grade PET fibers. The polymeric fibers may be chopped fibers in some embodiments. Where the mat 100 includes multiple layers, each layer may be a different material. For example, one layer may be PET while another layer may be polyethylene. The polyethylene layer may advantageously offer to the mat 100 the additional hydrophobicity.

The polymeric fibers of the glassless wet-laid nonwoven polymeric layer, in particular mat 100, may have linear mass densities of between about 1.0 denier and 10.0 denier, such as between about 1.0 denier and 9.0 denier, such as between about 1.1 denier and 6.0 denier, such as between 1.2 denier and 4.0 denier, or between about 1.5 denier and 3.0 denier. Since denier is dependent on the density of the polymer, at 3.0 denier, the polymeric fibers may have a diameter between about 10-25 µm, such between about 12-23 µm, between about 15-20 µm, or between about 17-19 µm. Larger PET fibers (up to 25 denier) can be blended (as a minor component) to make the mat stiffer and therefore imparting better dimensional stability performance. For example, the glassless wet-laid nonwoven polymeric layer, in particular mat 100, may include between about 5% and 50%, oftentimes between about 15% and 30%, of coarse fibers (e.g., fibers having linear mass densities of greater than about 4.0 denier, oftentimes, between about 4.0 denier and 25 denier, more often between about 8 denier and 15 denier). In embodiments with coarse fibers, the glassless wet-laid nonwoven polymeric layer, in particular mat 100, may include between about 50% and 95% (e.g., between 70% and 85%) of the finer fibers having linear mass densities up to 4.0 denier as described above. The polymeric fibers may have lengths of between about between about 3 mm and 100 mm, such as lengths between about 6 mm and 25 mm, lengths of between about 12 mm and 20 mm, and lengths of between about 15 mm and 18 mm. Fibers with higher linear mass densities and/or longer fibers may provide greater dimensional stability to the mat. Particular examples of fiber dimensions that have been shown to provide the mat 100 with good basis weight uniformity include 1.5 denier at 0.5 inches (or around 12.7 mm) in length, 2.0 denier at around 0.6 inches (or around 15 mm) in length, and 3 denier at around 0.75 inches (or around 19.05 mm).

Typically, the linear mass densities of the fibers can be determined in accordance with DIN EN ISO 1973:1995-12 (vibroscope method).

The polymeric fibers, which may be substantially the same size or may include a blend of differently sized fibers. For example, differently sized fibers may form layers of different densities within the glassless wet-laid nonwoven polymeric layer, in particular mat 100. In embodiments in which the mat 100 is formed from a combination of differently sized fibers, the different sized fibers may be homogenously dispersed or distributed throughout the mat 100.

As indicated above, the use of larger polymeric fibers helps increase the dimensional stability of the glassless wet-laid nonwoven polymeric layer, in particular mat 100. The binder may be selected to further enhance the dimensional stability of the glassless wet-laid nonwoven polymeric layer, in particular mat 100. The binder is typically homogenously, or relatively evenly dispersed or distributed throughout the glassless wet-laid nonwoven polymeric layer, in particular mat 100. To help contribute to the dimensional stability, the binder may exhibit high cross-linking ability, which may increase the tensile strength and stiffness of the glassless wet-laid nonwoven polymeric layer, in particular mat 100, to improve the dimensional stability. To achieve the necessary cross-linking, the binder may include a self-cross-linking material (e.g., a self-crosslinking acrylic latex) and/or include a cross-linking additive. A hot/wet% may be indicative of the cross-linking ability of the binder. In some embodiments, a hot/wet% of the binder may be at least or about 30%, at least or about 35%, at least or about 40%, at least or about 45%, at least or about 50%, at least or about 55%, at least or about 60%, at least or about 65%, at least or about 70%, or more.

The glassless wet-laid nonwoven polymeric layer, in particular mat 100, includes one or more binders that bind the respective fibers together to form the mat 100. The glassless wet-laid nonwoven polymeric layer, in particular mat 100, after curing, may include between at least 60 wt.-% polymeric fibers and up to 100 wt.-% polymeric fibers, preferably between at least 70 wt.-% polymeric fibers and up to 100 wt.-% polymeric fibers. Possible subranges may include between about 50-95% of polymeric fibers, by weight, in particular 60-100% of polymeric fibers, in particular 70-100% of polymeric fibers, and such as between 55-90%, between about 60-85%, between about 65-80%, between about 70-75%, or about 70%. The glassless wet-laid nonwoven polymeric layer, in particular mat 100, after curing, may include between at least 5 wt.-% binder and up to 30 wt.-% binder. The binder is in the cured state and means solid binder. Possible subranges may include about 5-50% of binder, by weight, such as between about 10-45%, between about 15-40%, between about 20-35%, or between about 25-30%. In one example, the mat may include about 30% binder and 70% fiber by weight. This design has been shown to have particularly good strength and surface quality (e.g., minimal surface defects, such as wrinkles, undispersed fibers, holes, or the like). The binder may lose weight transitioning from an uncured state to a cured state (i.e., a binder add-on percentage). For example, the binder may have a binder add-on percentage of about 15% total weight, at least or about 20% total weight, at least or about 25% total weight, at least or about 30% total weight, at least or about 35% total weight, or more, which may further help increase the tensile strength and dimensional stability of the glassless wet-laid nonwoven polymeric layer, in particular mat 100.

The binder may be selected to have a relatively low cure temperature, as subjecting the glassless wet-laid nonwoven polymeric layer, in particular mat 100, to high processing temperatures may lead to the formation of wrinkles and/or other defects within the glassless wet-laid nonwoven polymeric layer, in particular mat 100, that may lead to a lack of basis weight uniformity. For example, the binder may have a cure point that is less than or about 350 °F, less than or about 325 °F, less than or about 300 °F, less than or about 275 °F, less than or about 250 °F, less than or about 225 °F, or less. Such temperatures may enable a curing process to be conducted at a sufficiently low temperature so as to not generate wrinkles. In one example, the curing temperature for the binder may be between 300-320 °F. Using binders with such a low curing temperature may be beneficial where the mat 100 is made substantially of polymeric fibers as, at higher temperatures, the polymeric fibers may wrinkle, which may lead to a more wrinkled and uneven mat 100.

The binder may be based on acrylic and/or styrene butadiene chemistry, or other common binder chemistries. The binder may be or include an acrylic copolymer latex. For example, the binder may contain RD-H125K (supplied by H.B. Fuller), CR-M90 (supplied by H.B. Fuller), and/or JM-106 (supplied by The Dow Chemical Company). For example, in some embodiments, the binder may be a thermoset binder based on urea formaldehyde (UF), melamine formaldehyde (MF), polyacrylic acid, sugar, and/or other binders.

In some embodiments, an additive may be included that may help enhance the wettability of the binder to polymeric fibers and may improve bondage and/or strength. For example, the binder may include a starch solution additive. In some embodiments, the additive may include glycol ester and/or an amine oxide-based material such as Mykon^{®} NRW-3 (supplied by Omnova Solutions). When present, the mat 100 may include between about 0.01 and 3 wt. % of the wettability additive, which may reduce the surface energy of the polymeric fibers to enhance adhesion.

In one example binder, the binder may have a composition of acrylic latex (e.g., an acrylic copolymer latex, such as Hycar^{®} 26138) and a formaldehyde-based cross-linking additive (e.g., a melamine formaldehyde-based cross-linking additive, such as Aerotex^{®} 3030 or Resimene^{®} AQ-7551). For example, the binder may include between about, by weight after curing, 90-99% acrylic latex, such as between about 92-98.5% acrylic latex, between about 93-98%, or about 97.5% acrylic latex. The binder may further include between about 1-10% of formaldehyde-based cross-linking additive, such as between about 1.5-8%, between about 2-6%, or about 2.5%. A formaldehyde free crosslinker can be used as well.

In another example binder, the binder may have a composition of polyacrylic acid and liquid starch (e.g., RediBOND^{®} 5330). For example, the binder may include between about, by weight, 85-95% of polyacrylic acid, such as between about 86-94%, between about 87-93%, between about 88-92%, or about 89% of polyacrylic acid. The binder may further include between about 5-15% of liquid starch, such as between about, by weight, 5-15% of liquid starch, such as between about 6-14%, between about 7-13%, between about 8-12%, or about 11% of liquid starch. In yet other embodiments, the binder may be based on sorbitol and/or dextrose. As will be discussed further below, binders with a crosslinker, such as Aerotex^{®} 3030, may lead to higher wrinkles (and, therefore, less basis weight uniformity) because the crosslinker may require a higher temperature during the curing process. In one example, the binder may be a polyacrylic acid-based binder, such as JM-106.

In certain embodiments, the binder may have various additives provided to increase the various material properties of the mat 100. For example, the binder may include additives to provide the mat 100 with a level of flame retardancy.

In some embodiments, the glassless wet-laid nonwoven polymeric layer, in particular mat 100, may have a thickness of between about 0.1 mm and 3 mm, commonly between about 0.15 mm and 2 mm, more commonly between about 0.2 mm and 1 mm. The glassless wet-laid nonwoven polymeric layer, in particular mat 100, may have a basis weight of between or about 0.2 lbs/100 ft² and 4.0 lbs/100 ft², between or about 0.55 lbs/100 ft² and 3.5 lbs/100 ft², between or about 0.6 lbs/100 ft² and 3.0 lbs/100 ft², between or about 0.65 lbs/100 ft² and 2.5 Ibs/100 ft², between or about 0.7 Ibs/100 ft² and 2.0 lbs/100 ft², or between or about 0.75 lbs/100 ft² and 1.5 lbs/100 ft². The glassless wet-laid nonwoven polymeric layer, in particular mat 100, may have a machine direction tensile strength of between about 10 lbf//3 in and 300 Ibf/3 in, between about 20 Ibf/3 in and 250 Ibf/3 in, between about 30 Ibf/3 in and 200 Ibf/3 in, between about 40 Ibf/3 in and 150 Ibf/3 in, between about 50 Ibf/3 in and 125 Ibf/3 in, between about 55 Ibf/3 in and 115 Ibf/3 in, or between about 60 Ibf/3 in and 110 Ibf/3 in. The glassless wet-laid nonwoven polymeric layer, in particular mat 100, may have a cross-machine direction tensile strength of between about 6 Ibf/3 in and 300 Ibf/3 in, between about 10 Ibf/3 in and 250 Ibf/3 in, between about 20 Ibf/3 in and 200 Ibf/3 in, between about 30 Ibf/3 in and 150 Ibf/3 in, between about 35 Ibf/3 in and 90 Ibf/3 in, between about 40 Ibf/3 in and 80 Ibf/3 in, or between about 45 Ibf/3 in and 70 Ibf/3 in. The glassless wet-laid nonwoven polymeric layer, in particular mat 100, may have a total tensile strength of between about 16 Ibf/3 in and 600 Ibf/3 in, between about 30 Ibf/3 in and 550 Ibf/3 in, between about 60 Ibf/3 in and 500 Ibf/3 in, between about 90 Ibf/3 in and 450 Ibf/3 in, between about 120 Ibf/3 in and 400 Ibf/3 in, between about 150 Ibf/3 in and 350 Ibf/3 in, or between about 200 Ibf/3 in and 300 Ibf/3 in. The glassless wet-laid nonwoven polymeric layer, in particular mat 100, may have a machine direction stiffness of between or about 2 g cm to 150 g cm, between or about 4 g cm to 125 g cm, between or about 6 g cm to 100 g cm, between or about 8 g cm to 75 g cm, between or about 10 g cm to 40 g cm, or between or about 15 g cm to 30 g cm. The glassless wet-laid nonwoven polymeric layer, in particular mat 100, may have a cross-machine direction stiffness of between or about 2 g cm to 100 g cm, between or about 5 gm cm to 75 g cm, between or about 10 g cm to 40 g cm, or between or about 15 g cm to 30 g cm. The glassless wet-laid nonwoven polymeric layer, in particular mat 100, may have an air permeability of at least or about 50 cubic feet per minute per square foot (CFM/ft²), at least or about 150 CFM/ft², at least or about 250 CFM/ft², at least or about 400 CFM/ft², at least or about 500 CFM/ft², at least or about 600 CFM/ft², at least or about 650 CFM/ft², at least or about 700 CFM/ft², at least or about 750 CFM/ft², at least or about 800 CFM/ft², at least or about 850 CFM/ft², at least or about 900 CFM/ft², at least or about 950 CFM/ft², at least or about 1000 CFM/ft², or more.

In some embodiments, the glassless wet-laid nonwoven polymeric layer, in particular mat 100, may be formed as a single layer. In other embodiments, the glassless wet-laid nonwoven polymeric layer, in particular mat 100, may be formed of two or more layers of polymeric fibers (e.g., seven layers). In such embodiments, each layer may be identical and/or some layers may be different. For example, one or more of the layers may use different polymeric fibers (a different type of fiber, different fiber diameter, different length, etc.), a different binder, and/or a different polymer/binder ratio, etc.

The glassless wet-laid nonwoven polymeric layer, in particular mat 100, may include one or more layers of fibers made in a single step or process. In other words, in embodiments in which the glassless wet-laid nonwoven polymeric layer, in particular mat 100, includes multiple layers, such layers may not be separately formed and then combined in a later stage or process (i.e., separately made and then bonded together). Rather, the layers are formed simultaneously, which results in a glassless wet-laid nonwoven polymeric layer, in particular mat 100, that functions as a single layer in terms of structure and integrity despite having different fiber compositions and/or layer densities. For example, the glassless wet-laid nonwoven polymeric layer, in particular mat 100, may be made using a wet-laid process, as described below. Such a process may produce a more uniform mat in basis weight, which may provide more uniform material properties across the glassless wet-laid nonwoven polymeric layer, in particular mat 100, when such material is used in a product (e.g., a more uniform thickness across the product or more aesthetic appearance). Accordingly, the materials discussed may be produced at lower cost and in less time.

As noted above, the glassless wet-laid nonwoven polymeric layer, in particular mat 100, may have a basis weight with high uniformity. This may be due to the wet-laid, non-woven process of forming the glassless wet-laid nonwoven polymeric layer, in particular mat 100, as well as the specific composition of the glassless wet-laid nonwoven polymeric layer, in particular mat 100. Specifically, the glassless wet-laid nonwoven polymeric layer, in particular mat 100, may have a basis weight with a low coefficient of variation (CV), which is the ratio of the standard deviation to a given mean value and shows the extent of variability in relation to that mean. The CV may be determined by measuring the basis weight for multiple samples (e.g., 30-60 samples) to determine the mean, standard deviation, and CV of the basis weight of all the samples. Typically, at least 30 samples are taken. While spunbond mats may have a high CV in the range of 5-10% (e.g., 7.1% for certain mats), the mat 100 may have a lower CV of between about 1-5%, such as between about 2-5%, or about 3%.

To such extent not already specified, all percentage values refer to weight %.

To such extent not already specified, all percentage values disclosed in the context of the glassless wet-laid nonwoven polymeric layer, in particular mat 100, refer to the total weight of the glassless wet-laid nonwoven polymeric layer, in particular mat 100.

### EXAMPLE 1

Nonwoven mats with PET (Polyethylene terephthalate) fibers having 1.5 denier (D) were produced using a pilot mat machine. The tested PET fibers in this example include: 6 mm fibers supplied by Engineered Fibers Technology, LLC (EFT); 10 mm fibers supplied by EFT; 15 mm supplied by EFT; %" fibers supplied by William Barnet & Son, LLC (Barnet); 1" fibers supplied by Barnet. Binder 1 contained Hycar^{®} 26138 and Aerotex^{®} 3030. Binder 2 contained JM106 (Polyacrylic acid based thermoset binder) and RediBond^{®} 5330. Binder 3 contained 90% Hycar^{®} 26138 and 10% RediBond^{®} 5330. Binder 4 contained just Hycar^{®} 26138. A two-zone oven was equipped with the pilot wet-laid machine. The two zones were set at 330 °F and 380 °F, respectively, for Binders 1 and 2. The two zones were set at 210 °F and 225 °F, respectively, for Binder 3 and 4. The line speed was 10 feet per minute (fpm) line speed. Table 1 details the comparison of the resultant mats.

**Table 1**

| Sample ID | Fibers Used | Binder Used | % Designed LOI | Basis weight (lbs/Sq) | Hot Wet (%) | Stiffness MD | Stiffness CD | Thickness (mils) - | Air perm (CFM/ft2) | Total Tensile (lbf/3") |
|---|---|---|---|---|---|---|---|---|---|---|
| 063020A | PET (1.5D 10mm, from EFT) | Binder 2 | 23% | 0.75 | 45% | | | 17.7 | 747.3 | 27.6 |
| 063020F | PET (1.5D 10mm, from EFT) | Binder 3 | 23% | 0.75 | 34% | | | 14.5 | 679.3 | 64.4 |
| 082420A | PET (1.5D 10mm, from EFT) | Binder 1 | 30% | 0.72 | 71% | | | 15.0 | 641.5 | 72.1 |
| 082420B | PET (1.5D 10mm, from EFT) | Binder 1 | 30% | 1.00 | 69% | | | 19.6 | 560.3 | 85.9 |
| 082420C | PET (1.5D 6mm, from EFT) | Binder 1 | 23% | 0.77 | 59% | | | 16.7 | 764.9 | 55.3 |
| 082420D | PET (1.5D 10mm, from EFT) | Binder 1 | 23% | 0.77 | 60% | | | 18.2 | 732.8 | 63.9 |
| 082520A | PET (1.5D 6mm, from EFT) | Binder 2 | 23% | 0.77 | 30% | | | 17.4 | 770.5 | 24.3 |
| 082520B | PET (1.5D 10mm, from EFT) | Binder 2 | 23% | 0.78 | 35% | | | 18.3 | 766.9 | 26.0 |
| 082520D | PET (1.5D 6mm, from EFT) | Binder 3 | 23% | 0.72 | 28% | | | 14.7 | 631.1 | 47.5 |
| 082520E | PET (1.5D 10mm, from EFT) | Binder 3 | 23% | 0.71 | 33% | | | 15.4 | 602.4 | 63.3 |
| 091620G | PET (1.5D 1", from Barnet) | Binder 4 | 30% | | | | | | | |
| 091620H | PET (1.5D 3/4", from Barnet) | Binder 4 | 30% | 1.03 | 83% | | | 17.6 | 470.9 | 93.9 |
| 091620I | PET (1.5D 3/4", from Barnet) | Binder 4 | 23% | 0.77 | 47% | | | 16.0 | 665.9 | 75.6 |
| 091720E | PET (1.5D 3/4", from Barnet) | Binder 3 | 30% | 1.04 | 24% | | | 17.8 | 438.8 | 104.8 |
| 101420B | PET (1.5D, 15mm from EFT) | Binder 1 | 30% | 1.01 | 76% | 11.88 | 7.69 | 17.0 | 503.0 | 103.0 |
| 101420D | PET (1.5D, 15mm from EFT) | Binder 4 | 30% | 1.01 | 45% | 10.7 | 9.9 | 18.4 | 587 | 100 |
| 101420G | PET (1.5D, 15mm from EFT) | Binder 3 | 30% | 1.03 | 33% | 11.3 | 7.6 | 17.5 | 545 | 113 |

As detailed above, several physical properties were tested for each mat and compared to data from the commercially available glass flooring mats. Basis weight was measured by weighing of handsheet samples (typically cut 12"X12") with the unit Ibs/sq (i.e., lbs/100 sq. ft2). Tensile strength of (3"X12") (Ibf/3") was measured using American Society for Testing and Materials (ASTM) method by an Instron machine in accordance with ASTM D5035-11(2019) : Standard Test Method for Breaking Force and Elongation of Textile Fabrics (Strip Method). Tensile strength was measured in the machine direction (MD) and the cross-machine direction (CD). Total tensile is the sum of the two. For hot/wet (%) testing, 3"X12" strips need to be submerged in water bath with Deionized (DI) water at 81° ± 1° C (180°± 2° F) for 10 minutes. Typically, strips from cross machine (CD) direction are used. Hot Wet (%) is average of CD wet tensile strength divided by average of CD dry tensile strength. Thickness was measured with a gauge under pressure of 1.686 kPa (28 ounce (784 gram) contact pressure and 3 inch diameter foot) and as outlined in TAPPI T4411, except for the pressure (instead of 50kPa the aforementioned pressure was used). Air permeability ("air perm") was measured by the Frazier test, which is described by ASTM Standard Method D737. This test was carried out at a differential pressure of about 0.5 inches of water (125 Pa differential pressure). Stiffness test was conducted according to a Technical Association of the Pulp and Paper Industry (TAPPI) method T 489 om-08.

LOI means the amount of cured binder being present.

From the data, it showed that, when controlling for binders used, a longer fiber, higher binder add-on percentage, higher basis weight all helped increase tensile strength of the PET mats. Such an increased tensile strength may be useful to increase the machine speed at which the mat is manufactured or used, which leads to a higher operation efficiency, higher throughput, and lower cost. In particular, none of the tested mats in this example had wrinkled fibers (as seen visually) except for sample "101420B." This sample had the highest length of fiber from EFT while using a Binder 1 binder, which resulted in wrinkles in the machine direction. Accordingly, the 1.5 D PET fiber with the noted lengths and binders (except Binder 1) produces mats with no wrinkles and, therefore, greater basis weight uniformity.

### Example 2

Nonwoven mats with PET fibers having 3.0 D were produced using a pilot mat machine including similar settings as used in Example 1. The tested PET fibers in this example include: 18 mm fibers supplied by EFT; %" fibers supplied by MiniFIBERS; and 1" fibers supplied by MiniFIBERS.

**Table 2**

| Sample ID | Fibers Used | Binder Used | % Designed LOI | Basis weight (lbs/Sq) | Hot Wet (%) | Stiffness MD | Stiffness CD | Thickness (mils) | Air perm (CFM/ft2) | Total Tensile (lbf/3") |
|---|---|---|---|---|---|---|---|---|---|---|
| 091620A | PET(3.0D 1", from Minifibers) | Binder4 | 30% | 1.03 | 76% | | | 24.66 | 875.0 | 109.1 |
| 091620B | PET(3.0D 1", from Minifibers) | Binder4 | 23% | 0.77 | 69% | | | 21.36 | 1103.8 | 77.9 |
| 0916200 | PET (3.0D 3/4", from Minifibers) | Binder4 | 30% | 1.01 | 62% | | | 27.05 | 902.9 | 102.6 |
| 0916200 | PET (3.0D 3/4", from Minifibers) | Binder4 | 23% | 0.78 | 61% | | | 23.69 | 1068.8 | 81.8 |
| 091720A | PET(3.0D 1", from Minifibers) | Binder4 | 30% | 0.99 | 25% | | | 20.4 | 727.1 | 101.8 |
| 091720B | PET (3.0D 3/4", from Minifibers) | Binder 3 | 30% | 1.03 | 25% | | | 21.7 | 694.9 | 101.2 |
| 101420A | PET (3.0D 18mm from EFT) | Binder 1 | 30% | 1.02 | 72% | 12.25 | 8.31 | 19.9 | 819.0 | 98.4 |
| 1014200 | PET (3.0D 18mm from EFT) | Binder4 | 30% | 0.98 | 39% | 8.9 | 8.8 | 20.1 | 828 | 95 |
| 101420E | PET (3.0D 18mm from EFT) | Binder 3 | 30% | 0.99 | 29% | 10.1 | 9.5 | 19.2 | 699 | 95 |
| 101420F | PET (3.0D 18mm from EFT) | Binder 3 | 30% | 1.58 | 35% | 26.4 | 14.6 | 26.4 | 560 | 144 |

From the data, it showed that, when controlling for binders used, a longer fiber, higher binder add-on percentage, higher basis weight all helped increase tensile strength of the PET mats. Fiber bundles were formed when 1" fibers were used, such as for samples 091620A, 091620B, and 091720A. This suggests that a 1" fiber length was too long to achieve good dispersion. On the other hand, mats using 3.0D, %" (or 18 mm) PET fibers may be manufactured with good dispersion and minimum amount of defects when the temperature is less than 330 °F, such as between about 270 °F and 320 °F, such as between about 280 °F and 310 °F, such as between about 290 °F and 300 °F.

### Example 3

Nonwoven mats with PET fibers having a mix of dimensions were produced using a pilot mat machine including similar settings as used in Example 1. The percentages of fibers noted in the below list are by weight. The tested PET fibers in this example include: 85% of fibers are 1.5 D, 6 mm supplied by EFT and 15% of fibers are 13D, ½" supplied fibers by Barnett; 85% of 1.5 D, 10 mm fibers supplied by EFT and 15% of fibers are 13D, ½" supplied fibers by Barnett; 85% 3.0 D, %" fibers supplied by MiniFIBERS and 15% of fibers are 13D, ½" supplied fibers by Barnett; 85% 3.0 D, 1" fibers supplied by MiniFIBERS and 15% of fibers are 13D, ½" supplied fibers by Barnett; 70% of fibers are 1.5 D, 6 mm supplied by EFT and 30% of fibers are 13D, ½" supplied fibers by Barnett; and 70% of 1.5 D, 10 mm fibers supplied by EFT and 30% of fibers are 13D, ½" supplied fibers by Barnett.

**Table 3**

| Sample ID | Fibers Used | Binder Used | % Designed LOI | Basis weight (lbs/Sq) | Hot Wet (%) | Thickness (mils) | Air perm (CFM/ft2) | Total Tensile (lbf/3") |
|---|---|---|---|---|---|---|---|---|
| 080720A | 85% PET (1.5D 10mm, from EFT) 15% PET (13D 1/2" from Barnet) | Binder 4 | 24% | 0.80 | 40% | 18.8 | 805.0 | 27.8 |
| 080720B | 70% PET (1.5D 10mm, from EFT) 30% PET (13D 1/2" from Barnet) | Binder 4 | 24% | 0.83 | 38% | 22.9 | 893.4 | 24.7 |
| 080720C | 85% PET (1.5D 10mm, from EFT), 15% PET (13D 1/2" from Barnet) | Binder 3 | 22% | 0.68 | 33% | 15.8 | 661.9 | 47.7 |
| 080720D | 70% PET (1.5D 10mm, from EFT). 30% PET (13D 1/2" from Barnet) | Binder 3 | 22% | 0.69 | 34% | 16.9 | 622.5 | 43.9 |
| 082420E | 85% PET (1.5D 6mm, from EFT) 15% PET (13D 1/2" from Barnet) | Binder 1 | 23% | 0.78 | 58% | 19.8 | 843.1 | 51.0 |
| 082420F | 70% PET (1.5D 6mm, from EFT) 30% PET (13D 1/2" from Barnet) | Binder 1 | 23% | 0.77 | 62% | 19.9 | 941.6 | 44.5 |
| 082420G | 85% PET (1.5D 10mm, from EFT) 15% PET (13D 1/2" from Barnet) | Binder 1 | 23% | 0.76 | 67% | 19.1 | 826.5 | 51.2 |
| 082420H | 70% PET (1.5D 10mm, from EFT) 30% PET (13D 1/2" from Barnet) | Binder 1 | 23% | 0.76 | 68% | 18.4 | 848.3 | 47.2 |
| 082520C | 85% PET (1.5D 10mm, from EFT) 15% PET (13D 1/2" from Barnet) | Binder 2 | 23% | 0.80 | 38% | 19.4 | 813.5 | 25.5 |
| 082520F | 85% PET (1.5D 10mm, from EFT) 15% PET (13D 1/2" from Barnet) | Binder 3 | 23% | 0.75 | 34% | 16.1 | 638.5 | 59.9 |
| 091620E | 85% PET (3.0D 1", from Minifibers) 15% PET (13D 1/2" from Barnet) | Binder 4 | 30% | 1.01 | 56% | 35.99 | 1025.6 | 82.9 |
| 091620F | 85% PET (3.0D 3/4", from Minifibers) 15% PET (13D 1/2" from Barnet) | Binder 4 | 30% | 1.02 | 63% | 39.99 | 1010.1 | 78.3 |
| 091620J | 85% PET (1.5D 3/4", from Barnet) 15% PET (13D 1/2" from Barnet) | Binder 4 | 30% | 1.02 | 92% | 20.5 | 519.9 | 80.0 |
| 091720C | 85% PET (3.0D 1", from Minifibers) 15% PET (13D 1/2" from Barnet) | Binder 4 | 30% | 1.01 | 25% | 23.1 | 764.5 | 97.9 |
| 091720D | 85% PET (3.0D 3/4", from Minifibers) 15% PET (13D 1/2" from Barnet) | Binder 3 | 30% | 1.04 | 27% | 23.8 | 777.1 | 93.6 |
| 091720F | 85% PET (1.5D 3/4", from Barnet) 15% PET (13D 1/2" from Barnet) | Binder 3 | 30% | 1.01 | 26% | 18.0 | 459.8 | 91.7 |

As stated above, blending fibers can make the mat stiffer (e.g., greater tensile strength) while still providing good uniformity. However, blending fibers that are too short may not provide this benefit. For example, samples 080720C and 080720D are mats with good uniformity, however their tensile strength is low due to the small length (10 mm) of a majority of the fibers used. On the other hand, sample 091720D has a great combination of good strength and uniformity. This confirms again that mats with 3.0D, %" (or 18 mm) PET fibers provide good tensile strength and uniformity.

### II. EXAMPLE INSULATION

FIG. 2 depicts a cross-sectional of an insulation component 200. FIG. 2 is a simplified view of the insulation component 200 as it removes certain components typical of insulation components. In some embodiments, the insulation component 200 may be used as an acoustic panel to provide acoustic absorption. The insulation component 200 may include a polymeric layer 210 (e.g., a facer layer) and core layer 220. The polymeric layer 210 may be the mat 100, as described above. For example, where the polymeric layer 210 is a facer layer, where conventional facer layers are made with glass material, the polymeric layer 210 may be a substantially glassless wet-laid, nonwoven mat (e.g., a substantially all-PET wet-laid mat). The core layer 220 may include one or more insulation layers to provide various insulative qualities, including thermal and acoustic qualities. The core layer 220 may be a glass mat (or multiple layers of glass mats) or an insulation board. The polymeric layer 210 and the one or more layers of the core layer 220 may be chemically bound together as a cured matrix (e.g., the crosslinking of polymer chains) by a binding element, as will be discussed further below. However, in other embodiments, the facer and core layers may be coupled through other means, such as through an adhesive layer (e.g., a PET adhesive layer), mechanical fasteners, or the like. In a yet further embodiment, the insulation component may include additional layers, such as a skin layer or the like.

Examples of materials for the core layer 220 may include fiberglass-based materials made of an inorganic material (e.g., woven or non-woven fibers) adhered together with a binding element, such as a thermosetting binder or resin. The fibers may include one or more fibers such as glass fibers, carbon fibers, among other kinds for fibers. In embodiments, the fibers may make up about 50 wt.% to about 99.5 wt.% of the fiberglass-containing products. Additional exemplary fiber weight ranges include about 90 wt.% to about 99 wt.%; and about 75 wt.% to about 95 wt%. In other embodiments, the core layer 220 may include polymeric fibers, such as the polymeric layer 210. In yet other embodiments, the core layer 220 may include foam materials.

In some embodiments, the polymeric layer 210 and core layer 220 may be materially homogenous in that the various layers are formed of substantially the same material, although in some embodiments the layers may have different densities and/or stiffnesses. For example, the insulation component 200 may be formed of substantially the same material when the materials of each of the layers 210, 220 are the same by about 50 wt.% to about 99.5 wt.%. Alternatively, the materials of the layers 210, 220 may be substantially the same when the materials of the layers 210, 220 are the same by about 75 wt.% to about 99 wt.%, about 80 wt.% to 90 wt.%, or about 90 wt.% to about 99 wt.%. Accordingly, the core layer 220 may be substantially glassless (e.g., a PET wet-laid mat, similar to the mat 100) and recyclable. However, in other embodiments, the facer and core layer may be formed of different materials and/or by a different process. For example, the facer may be formed of substantially entirely of polymeric fibers while the layers of the core may be formed of glass fiber. In another example, the core layer may be a mat formed through one of a wet-laid process, spunbond, meltblown process, or the like.

In some embodiments, the polymeric layer 210 and core 220 may be bonded together such that they have a parting strength of at least about 120 g/g (e.g., at least about 150 g/g). An exemplary range for the ordinary parting strength may be about 120 g/g to about 400 g/g. In some embodiments, the ordinary parting strength may be between about 150 g/g to 350 g/g, between about 200 g/g to 300 g/g, or between about 225 g/g to 275 g/g.

The insulation component 200 may have a fiber diameter, formed from averaging the fiber diameters of the polymeric layer 210 and core layer 220, of less than about 2 µm. For example, the insulation component 200 may have a fiber diameter between 0.1-20 µm, 0.2-18 µm , 0.5-15 µm, 0.75-10 µm, 1-8 µm , 1.5-5 µm , or 1.6-3 µm.

Each of the layers 210, 220 may have different fiber diameters. For example, the polymeric layer 210 may include a fiber diameter of between about 5-50 µm, such as between about 6-45 µm, between about 7-40 µm, between about 8-35 µm, between about 9-30 µm, between about 10-25 µm, between about 11-20 µm, or between about 12-15 µm. The polymeric layer may include between about 0.5-15.0 denier, such as between about 1.0-13.0 denier, between about 1.5-10.0 denier, between about 1.5-15.0 denier, between about 2.0-10.0 denier, or between about 3.0-5.0 denier. These differences in fiber diameter may allow the insulation component 200 to achieve the total fiber diameter, as discussed above, while minimizing the costs of manufacturing the insulation component 200. Specifically, because the fiber diameter of the polymeric layer 210 is larger than the core layer 220, the polymeric layer 210 may be cheaper to manufacture than the core layer 220. This may decrease the cost of manufacturing the insulation component 200 while still manufacturing the insulation component 200 to have the desired acoustic/thermal insulative qualities.

The polymeric layer 210 may include a basis weight of between about 0.2 lbs/ft² and 6 lbs/ft², such as between about 0.5 lbs/f²t and 5.5 lbs/ft², such as between about 0.8 lbs/ft² and 5 lbs/ft², such as between about 1 lbs/ft² and 4 lbs/ft², or such as between about 2 lbs/ft² and 3 lbs/ft².

The layers 210, 220 may be chemically bound together with a binding element. As will be discussed below, this binding element may be a cured binder as a result of a curing process. In some embodiments, the binder may be one or more of the listed binders listed above for the mat 100. The binder may include an effective amount of a water repellant to limit the intrusion of aqueous matter after the binder is set. For example, vinyl acrylate latex copolymers may further incorporate stearylated melamine for improvement in water repellency. Exemplary concentrations of the stearylated melamine may include about 3 wt. % to 10 wt. %, (e.g., about 6 wt. %). The stearylated melamine may be in liquid form having a solids content of about 40 wt. percent and is mixed with a suitable copolymer latex and water to prepare the binder. In other embodiments, the binding element may include a silicone material (e.g., reactive silicone) to improve its water repellency. This material mixture may have a pH of about 9, a viscosity of about 45 centipoises and be anionic.

The binder may be an adhesive or cohesive binder. For example, the binder may be an acrylic latex, such as Hycar^{®} 26138, and a cross-linking additive, such as Aerotex^{®} 3030. The polymeric layer 210 may include a binder add-on percentage between about 5-50% binder, by weight, such as between about 10-45%, between about 15-40%, between about 20-35%, or between about 25-30%.

In other examples, the binder may be a cohesive binder. Examples of a cohesive binder may include, for example, formaldehyde-containing binder compositions. Such compositions may include phenol-formaldehyde (PF) binder compositions, phenol-urea-formaldehyde (PUF) binder compositions, urea-formaldehyde (UF) binder compositions, and melamine-formaldehyde (MF) binder compositions, among other formaldehyde-containing binder compositions. In embodiments, PF binder compositions may include resole binder compositions where the amount of formaldehyde (by mole) exceeds the amount of phenol. Phenol-to-formaldehyde mole ratios in these resole binder compositions range from 1:1 to 1:5 (e.g., 1:1.2 to 1:4.5; 1:1.5 to 1:2.5; etc.). In further embodiments, the PF binder compositions are aqueous compositions characterized by a total solids concentration greater than or about 30 wt.%, greater than or about 40 wt.%, greater than or about 50 wt.%, greater than or about 60 wt.%, or more. Other example binders may be described in U.S. Patent Application No. 17/318,430 entitled "Formaldehyde-Containing Products With Reduced Formaldehyde Emissions," which is incorporated by reference herein in their entirety.

In some embodiments, the thickness of the polymeric layer 210 may be less than or about 20%, less than or about 15%, less than or about 10%, less than or about 5%, less than or about 3%, less than or about 1% or less of an overall thickness of the insulation component 200. The insulation component 200 may have a dimensional stability of less than or about 0.5%, less than or about 0.4%, less than or about 0.3%, less than or about 0.2%, less than or about 0.15%, less than or about 0.10%, or less.

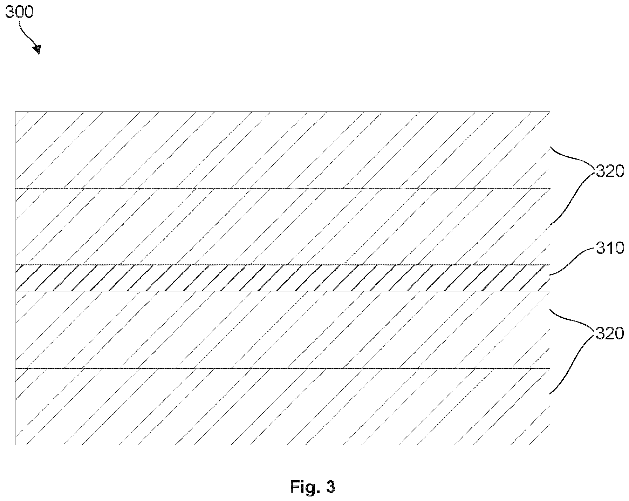

Although the insulation component 200 depicts two layers (e.g., one polymeric layer 210 and one core layer 220), in other embodiments, the insulation component may include more than two layers. For example, FIG. 3 depicts an insulation component 300 with a polymeric layer 310 (e.g., the mat 100) and multiple core layers 320. It is understood that features ending in like reference numerals as features discussed above are similar, except as noted below. The core layers 320 may include a polymeric layer 310 coupled therebetween. The polymeric layer 310 may be coupled to adjacent core layers 320 with a binding element (e.g., glue or the like). The polymeric layer 310 may be coupled between every two core layers 320, however, in other embodiments, the polymeric layer may be coupled between any number of layers, such as every one layer, three layers, four layers, or the like. The polymeric layer 310 may assist in adhering adjacent core layers together when the insulation component 300 is formed (e.g., when heated to temperatures over 200 °C, as will be discussed further below. In other embodiments, the insulation component 300 may include an adhesive layer between the layers 310, 320 to couple the layers 310, 320 together.

It is understood that the insulation component 300 may include more or less layers than shown. For example, there may be more than one polymeric layer or more or less than four core layers. Further, there may be additional layers coupled to the insulation component 300, such as a fabric layer. Such a configuration may be used to form cubicle walls that provide good acoustic absorption properties.

### III. EXAMPLE MANUFACTURING PROCESS

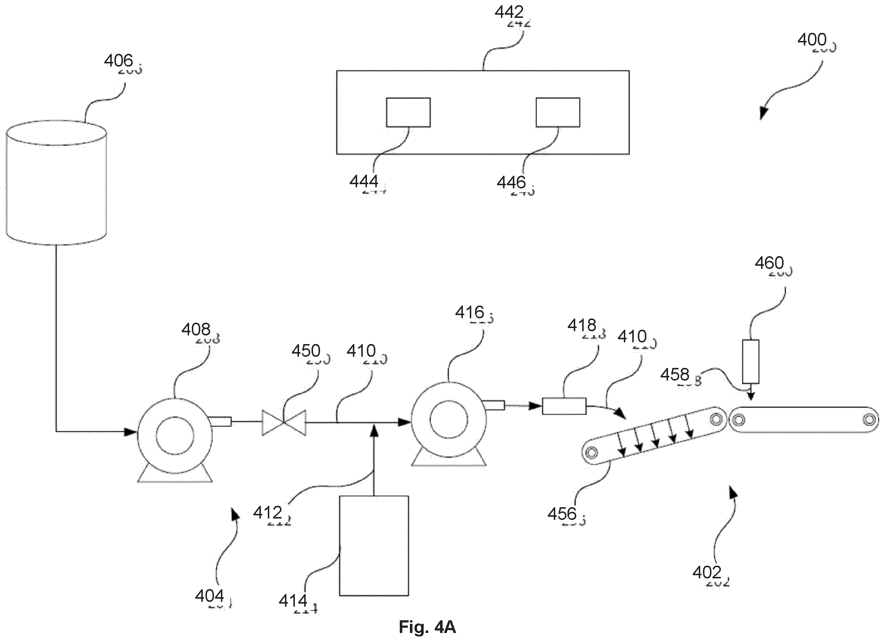

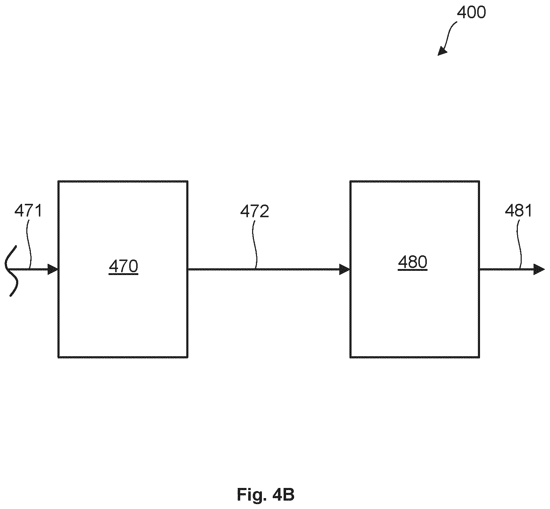

FIGS. 4A and 4B depict a schematic view of a manufacturing system 400 that produces a mat 100 and insulation components 200, 300. Specifically, FIG. 4A depicts the process of manufacturing an uncured substrate and FIG. 4B depicts the process of forming the uncured substrate into a mat 100 and insulation components 200, 300. In operation, the manufacturing system 400 is able to produce a single or multilayered mat 100 in a single step/process and an insulation component 200, 300 with the mat 100. Where the mat 100 is a multilayered mat, the layers of the mat are not separately formed and then combined at a later stage or process (i.e., separately made and then bonded together), but instead are formed homogeneously. Accordingly, a multilayered mat 100 produced by the manufacturing system 400 may therefore be produced at lower cost and in less time.

Turning first to FIG. 4A, the manufacturing system 400 produces an uncured substrate. The manufacturing system 400 may include at least one fluid line that delivers polymeric fibers to a hydroformer 402 that forms each layer of the uncured substrate simultaneously. While a hydroformer 402 is illustrated, a fourdrinier wire or a delta former may also be used to produce the uncured substrate in a single step/process.

In single layer embodiments, the manufacturing system 400 may use a fluid line 404 to deliver polymeric fibers from at least one fiber source 406 to the hydroformer 402. The fiber source 406 may contain one or more types of polymeric fibers (e.g., differently sized polymeric fibers, polymeric fibers made from different materials, or a combination thereof). Fluidly coupled to the fiber source 406 is a pump 408 (e.g., a thick stock pump) that pumps a fluid 410 containing the polymeric fibers. For example, the fluid 410 may include water, viscosity modifiers, dispersants, defoamers, etc. mixed with the polymeric fibers. After passing through the pump 408, the fluid 410 is diluted with a dilution fluid 412 (e.g., water, viscosity modifiers, dispersants, defoamers, or a combination thereof) stored in a dilution tank 414. By diluting the polymeric fibers, the manufacturing system 400 may enable a more even distribution of the polymeric fibers in the uncured substrate by the hydroformer 402. The dilution fluid 412 combines with the fluid 410 before the fluid 410 enters a second pump 416. The pump 416 (e.g., thin stock pump) may facilitate mixing of the fluid 410 and the dilution fluid 412 before delivery to the hydroformer 402. After exiting the pump 416, the fluid 410 enters an inlet pipe 418 of the hydroformer 402. The inlet pipe 418 directs the fluid 410 into the hydroformer 402, which forms the uncured substrate by removing the fluid 410 and dilution fluid 412 from the fluid/coarse fiber mixture as the mixture is poured onto the hydroformer 402.

In embodiments in which the uncured substrate is formed of multiple layers, additional fluid lines are used to supply polymeric fibers from one or more fiber sources (which may be the same or different than fiber source 406) to the hydroformer 402. The polymeric fibers may be pumped within a second fluid (such as water, viscosity modifiers, dispersants, defoamers, etc. mixed with the polymeric fibers) to be diluted with a dilution fluid (e.g., water, viscosity modifiers, dispersants, defoamers, or a combination thereof) stored in an additional dilution tank. The dilution fluid may be combined with the second fluid before the second fluid enters a second pump that enables mixing of the second fluid and the dilution fluid to form a second mixture before delivery to the hydroformer 402. After exiting the second pump, the second mixture enters an inlet pipe of the hydroformer 402. The hydroformer 402 removes the second fluid and dilution fluid from the second mixture as the second mixture is poured onto the hydroformer 402 atop a first layer of the uncured substrate that was immediately formed by the hydroformer 402. The second fluid is directed or poured atop the first layer of the uncured substrate as the fluid is being drained from the first fluid 410 such that the additional layer and the initial layer are formed simultaneously by the hydroformer 402. Additional layers may be formed in a similar manner.

The flow of the fluid 410 (and fluid for additional layers) through the manufacturing system 400 may be controlled with a controller 442. The controller 442 may include one or more processors 444 that execute instructions stored on one or more memories 446 to control the operation of various valves as well as the pumps. For example, one or more valves 450 coupled with the fluid lines may be controlled, which enables the controller 442 to control the amount of various types of polymeric fibers to between 0 and 100 percent in a given layer of the uncured substrate, and more commonly to the percentages described in the mat embodiments herein. Additionally, by controlling the flow of the fluids the controller 442 may increase or decrease thickness of the uncured substrate and/or respective layers thereof.

As the fluids (such as fluid 410) enter the hydroformer 402 the fluids contact a conveyer belt 456 that drains a substantially majority of the fluid fluids leaving behind the polymeric fibers of the one or more layers. The manufacturing system 400 may then apply one or more binders 458. In some embodiments, the binder 458 may include one or more of the binders discussed above. For example, the binder 458 may include resinous binders such as urea formaldehyde, modified urea formaldehyde, acrylic and/or styrene-butadiene resins, modified acrylic resins, among other types of binders. Wetting agents may also be included in the binder, such as glycol ester and the like.

These binders 458 may be stored in one or more binder sources 460. The binder(s) 458 may be applied to the polymeric fibers by moving the polymeric fibers under a spray or waterfall of binder. Any excess binder may then flow through the fibers. In this way, when manufacturing a multilayered uncured substrate, the manufacturing system 400 may bind the fibers in their respective layers as well as bind any layers together without performing multiple binding steps/processes. Stated differently, the manufacturing system 400 may simultaneously bind the fibers in the respective layers and bond the fiber layers together in a single step. The application of the binder(s) 458 to multiple layers simultaneously results in the binder being relatively evenly distributed through and between the various layers without forming or defining a binder layer between the layers. Stated differently, a separate or individual layer of binder is not formed or defined at an interface or boundary between the layers as occurs in conventional systems where the layers are formed individually and combined in a subsequent process. The relatively even distribution of the binder(s) 458 may increase the strength of the uncured substrate and/or reduce issues such as delamination of the layers. In addition, the uncured substrate described herein has a less defined boundary between multiple layers since any layers are simultaneously formed. Rather, the uncured substrate has a relatively gradual transition from the one layer to another layer due to the simultaneous formation of the layers, which may increase the strength and/or reduce issues such as delamination of the layers.

Once the uncured substrate has been formed by the process depicted in FIG. 4A, additional processing steps may be performed to form the mat 100 and insulation component 200. For example, with reference to the schematic manufacturing process shown in FIG. 4B, the arrow 481 may represent the uncured substrate formed in FIG. 4A entering a curing oven 470 (e.g., along a conveyor belt) where the uncured substrate is heated to a curing temperature and the binder starts to cure. The temperature of the curing oven 470 and the speed that the uncured substrate is fed into the curing oven 470 may be adjusted to control the curing time and temperature of the uncured substrate. In some embodiments, temperature and speed may be set to completely cure the binder such that the uncured substrate cures into the mat 100. However, in other embodiments, the temperature and speed may be set to partially cure the uncured substrate. The uncured substrate may additionally or alternatively be compressed prior to or during the curing stage by being compressed against a plate or the like.

The curing oven 470 may cure the uncured substrate to form the mat 100. The mat 100 may leave the curing oven 470 along the arrow 472. The mat 100 may leave the curing oven 470 to enter a post-processing unit 480 to form the insulation component 200. For example, the post-processing unit 480 may include one or more components and materials to couple the mat 100 (e.g., the polymeric layer 210) to a core layer 220 to form an insulation component 200. In some embodiments, the core layer 220 may be formed using a similar process to forming the mat 100, as described above (e.g., via a wet-laid process). In other embodiments, the core layer may be formed using a spunbond process, meltblown process, or the like. This may include coupling an uncured substrate of fiber and binder (later cured to form the core layer 220) to the mat 100. This combination may be further cured in another curing oven to form the insulation component 200. Accordingly, the insulation component 200 may be packaged and shipped to an end user along arrow 481. In other embodiments, the core layer may be separately provided as already being cured before being coupled to the mat. In yet other embodiments, the core layer may be homogenously formed with the mat.

In yet other embodiments, an insulation component 300 may be formed by coupling polymeric layers 310 between one or more core layers 320 to form an uncured substrate. The uncured substrate may be cured in another curing oven such that the polymeric layers 310 adheres adjacent core layers 320 together to form the insulation component 300. However, in other embodiments, an adhesive layer may be applied between the layers 310, 320 together to couple the layers 310, 320 together.

In some embodiments, the post-processing unit 480 may include one or more components to add a design to the mat 100 of the insulation component 200. For example, the post-processing unit 480 may include an embossing roller to emboss a design or pattern onto the mat 100. Such embossing may be difficult with glass material as the temperatures required to melt glass (and, therefore, to emboss glass) are significantly higher than standard embossing temperatures. Accordingly, forming the mat 100 out of polymeric fibers may be beneficial in allow the mat 100 to be embossed. The post-processing unit 480 may additionally or alternatively include a color dying component to add some color to the mat 100.

These design and colors components may be useful to provide different aesthetics to the mat 100 while reducing costs. Other insulation components that are not made entirely of polymeric fibers (e.g., those made with glass fibers) may include a fabric layer that covers the polymeric layer (e.g., the polymeric layer 210) in order to allow for the insulation component to be handled without causing the user to feel any itching sensation as well as to allow for the insulation component to include an aesthetic design. The mat 100 may provide such uses while reducing manufacturing costs by removing the need to manufacture and couple the fabric layer to the insulation component 200. Specifically, where the mat 100 is made substantially of all polymeric fibers, the mat 100 may act as the outer-most layer as the mat 100 is not itchy, and may include an aesthetic design from the embossment and colors.

. Other example wet-laid manufacturing processes may be described in U.S. Patent Application No. 17/145,459 entitled "Polymeric Wet-Laid Nonwoven Mat for Flooring Applications," which is incorporated by reference herein in their entirety.

While several embodiments and arrangements of various components are described herein, it should be understood that the various components and/or combination of components described in the various embodiments may be modified, rearranged, changed, adjusted, and the like. For example, the arrangement of components in any of the described embodiments may be adjusted or rearranged and/or the various described components may be employed in any of the embodiments in which they are not currently described or employed. As such, it should be realized that the various embodiments are not limited to the specific arrangement and/or component structures described herein.

In addition, it is to be understood that any workable combination of the features and elements disclosed herein is also considered to be disclosed. Additionally, any time a feature is not discussed with regard in an embodiment in this disclosure, a person of skill in the art is hereby put on notice that some embodiments of the invention may implicitly and specifically exclude such features, thereby providing support for negative claim limitations.

Having described several embodiments, it will be recognized by those of skill in the art that various modifications, alternative constructions, and equivalents may be used without departing from the spirit of the invention. Additionally, a number of well-known processes and elements have not been described in order to avoid unnecessarily obscuring the present invention. Accordingly, the above description should not be taken as limiting the scope of the invention.

Where a range of values is provided, it is understood that each intervening value, to the tenth of the unit of the lower limit unless the context clearly dictates otherwise, between the upper and lower limits of that range is also specifically disclosed. Each smaller range between any stated value or intervening value in a stated range and any other stated or intervening value in that stated range is encompassed. The upper and lower limits of these smaller ranges may independently be included or excluded in the range, and each range where either, neither or both limits are included in the smaller ranges is also encompassed within the invention, subject to any specifically excluded limit in the stated range. Where the stated range includes one or both of the limits, ranges excluding either or both of those included limits are also included.

As used herein and in the appended claims, the singular forms "a", "an", and "the" include plural referents unless the context clearly dictates otherwise. Thus, for example, reference to "a process" includes a plurality of such processes and reference to "the device" includes reference to one or more devices and equivalents thereof known to those skilled in the art, and so forth.

Also, the words "comprise," "comprising," "include," "including," and "includes" when used in this specification and in the following claims are intended to specify the presence of stated features, integers, components, or steps, but they do not preclude the presence or addition of one or more other features, integers, components, steps, acts, or groups.

## Claims

1. An insulation component, comprising:
a wet-laid nonwoven polymeric layer comprising less than 10 wt.-% of glass fibers, comprising:
a plurality of polymeric fibers, wherein:
the plurality of polymeric fibers have a linear mass density of between about 0.5 denier and 13.0 denier;
the plurality of polymeric fibers have a length of between about 5 mm and 50 mm; and
a binder, wherein:
the binder has a binder add-on percentage of between about 5% and 30%; and
the glassless wet-laid nonwoven polymeric layer has a basis weight with a coefficient of variation between about 1% and 5%; and
a core layer coupled to the polymeric layer.

2. The insulation component of claim 1, wherein the binder comprises one or both of an acrylic-based binder and a styrene butadiene-based binder.

3. The insulation component of claim 1 or 2, wherein the plurality of polymeric fibers comprise one or more of, acrylic fibers, polyester fibers, preferably PET fibers, and polypropylene fibers.

4. The insulation component of claims 1 to 3, wherein the core layer is a glassless polymeric material.

5. The insulation component of claims 1 to 4, wherein the plurality of polymeric fibers have a diameter of between about 5 µm and 50 µm.

6. The insulation component of claim 5, wherein the polymeric layer and the core layer are coupled together with an adhesive layer.

7. The insulation component of claims 1 to 6, wherein the core layer is a first core layer of a plurality of core layers.

8. The insulation component of claims 1 to 7, wherein the core layer is coupled to the polymeric layer through a binding element.

9. The insulation component of claims 1 to 8, wherein the core layer is one of a wet-laid, spunbond, or meltblown mat.

10. The insulation component of claims 1 to 9, wherein:
the wet-laid nonwoven polymeric layer comprising less than 10 wt.-% of glass fibers includes a first face and a second face; and
the first face is coupled to the core layer and the second face includes a design.

11. A method of manufacturing an insulation component, comprising:
forming a wet-laid nonwoven polymeric layer comprising less than 10 wt.-% of glass fibers , comprising:
a plurality of polymeric fibers, wherein:
the plurality of polymeric fibers have a linear mass density of between about 0.5 denier and 13.0 denier;
the plurality of polymeric fibers have a length between about 5 mm and 50 mm; and
a binder, wherein:
the binder has a binder add-on percentage of between about 5% and 30%; and
the glassless wet-laid nonwoven polymeric layer has a basis weight with a coefficient of variation between about 1% and 5%; and
coupling a core layer to the polymeric layer.

12. The method of claim 11, wherein the binder comprises one or both of an acrylic-based binder and a styrene butadiene-based binder.

13. The method of claim 11 or 12, wherein the plurality of polymeric fibers comprise one or more of acrylic fibers, polyester fibers, preferably PET fibers, and polypropylene fibers.

14. The method of claims 11 to 13, wherein the core layer is a glassless polymeric material or fiberglass material.

15. The method of claim 14, wherein the plurality of polymeric fibers have a diameter of between about 5 µm and 50 µm.

16. The method of claims 11 to 15, wherein coupling the core layer to the polymeric layer includes coupling the core layer to the polymeric layer through a binding element.

17. The method of claims 11 to 16, further comprising forming the core layer through a wet-laid process, spunbond process, or meltblown process.

18. The method of claims 11 to 17, further comprising embossing a design on the polymeric layer.

19. The method of claims 11 to 18, further comprising dying a color on the polymeric layer.

20. A mat, comprising:
a plurality of polymeric fibers, wherein:
the plurality of polymeric fibers have a linear mass density of between about 0.5 denier and 13.0 denier;
the plurality of polymeric fibers have a length of between about 5 mm and 50 mm; and
a binder, wherein:
the binder has a binder add-on percentage of between about 5% and 30%; and
the mat has a basis weight with a coefficient of variation between about 1% and 5%, preferably the mat is a wet-laid nonwoven polymeric layer comprising less than 10 wt.-% of glass fibers .
